# EUROPEAN PATENT SPECIFICATION

(11) **EP 1 616 727 B1**
(45) Date of publication and mention of the grant of the patent: **06.08.2008**
(21) Application number: 05104690.2
(22) Date of filing: 31.05.2005
(51) Int. Cl.: B60D 1/60, B60D 1/28, B60D 1/06

(54) **Towing device for trailers, equipment and machines in general**
Abschleppvorrichtung für Anhänger, Anlagen und Maschinen im allgemeinen
Dispositif d'attelage pour remorques, équipements et machines en général

(30) Priority: 08.06.2004 IT MO20040145
(43) Date of publication of application: 18.01.2006
(73) Proprietor: CBM S.p.A., 41100 Modena (IT)
(72) Inventor: Cornia, Enrico Maria, 41100 Modena (IT)
(74) Representative: Modiano, Micaela Nadia

(56) References cited:
- EP-A- 1 426 202
- EP-A- 1 488 942
- DE-C1- 3 824 028
- US-A- 3 779 653

## Description

The present invention relates to a towing device for trailers, equipment and machines in general, i.e., to a set of mechanical elements that is intended to be installed, possibly at a variable height, in the rear part of a self-propelled vehicle, for example a tractor, in order to allow stable but detachable engagement in towing trailers, equipment and machines in general, for example power-using machines: this is achieved by way of a towing coupling between the rear element for hitching to the self-propelled vehicle, which is for example spherical with a vertical axis, and the lower face of the end of the drawbar of the trailer, which is provided correspondingly with a hemispherical cavity.

The background art, such as that disclosed in EP 14 26 202 A, comprises devices in which the towing coupling is kept stable, during operation, by the arm that faces backward, with respect to the direction of travel, of a tilting locking element (known in the jargon as "latch") that is substantially L-shaped and in which the end of its horizontal arm can overlap the end of the drawbar in order to lock the towing coupling, i.e., limit its vertical play, while the vertical arm of said tilting locking element, which is pivoted horizontally to the lower end of a vertical supporting fork, is prevented from rotating in any case about its own pivoting axis because it is fixed by means of a bolt that can be inserted horizontally, with minimal manual skill, in said fork in a higher position and can be likewise removed from said fork respectively in order to lock and release the coupling between said end of the drawbar and said towing element.

However, such a towing device does not allow to control both of the extreme angular positions of said tilting locking element that has a substantially L-shaped profile; moreover, the device cannot be operated easily and quickly as regards inserting the bolt in said device and extracting it therefrom: after extraction, such tilting locking element in fact becomes unstable with respect to the raised position; finally, the choice of the articulation in which the hinge pivot of the tilting locking element is inserted in a lower region in the vertical supporting fork can cause, during operation, intense internal stresses in the corner region of said L-shaped tilting locking element, because it is located at the hole engaged by the bolt and above said hinge pivot.

In the case of the very recent utility model publication DE 203 18531 in the name of Cramer Kupplung, instead of a tilting locking element there is a type of locking element that is shaped like a horizontal bracket that can rotate about the vertical axis of a pivot, which constitutes the other arm of the L-shape, and is coupled in a supporting block: said bracket can be turned laterally with respect to its active position that is directed longitudinally backward in order to release the towing coupling, if the transverse bolt that locks said pivot to said supporting block is extracted manually.

In the recent cases of patent application EP 1284206 in the name of Sharmüller and of another currently commercially available device, the locking element, which has an L-shaped profile, can be tilted inside a vertical fork, by which it is supported in a lower region by means of a lower hinge pivot, and can be locked by means of a locking bolt that is arranged in an upper region: in the first case, said bolt can be extracted entirely manually, whereas in the second case it can be extracted only partially and by acting manually on a radial tab of the shaft in contrast with the action of an external coaxial spring: said radial tab can be inserted, when the spring is compressed, in a notch that provides peripheral interlocking, thus remaining in the axial position that is most suitable for reinsertion of the bolt, which can be achieved by the operator, who lifts with one hand said tilting locking element and disengages, with the other hand, said radial tab from said notch, allowing the return of the spring and the reinsertion of the bolt.

However, even in this last device there is the drawback of the instability of the tilting locking element when it is raised with respect to its horizontal operating position and is not retained by said partially extracted bolt.

This background art is susceptible of considerable improvements as regards the possibility to eliminate or reduce significantly the drawbacks noted above.

This leads to the need to solve the technical problem of finding a towing device that allows to achieve and stabilize both of the extreme positions of said tilting locking element, to be the site of weaker internal tensions, to the benefit of its mechanical strength, and also to allow far more speed and safety in maneuvering and controlling said extreme positions, all in a simple manner and with low costs.

The invention solves this technical problem by adopting a tilting angular lever, which can be locked in the two extreme positions, a horizontal one for locking the towing coupling and another one that is nearly vertical for disengaging said coupling: the front part of said tilting angular lever is coupled to a same locking element, which is turned about its own axis through an angle that covers the angular space traced by said tilting angular lever in passing from one to the other of its extreme positions.

The fulcrum of said tilting angular lever is located in an intermediate hole thereof, which is provided with a corresponding hinge pivot, which is coupled rotationally in the upper part of the vertical supporting fork: said hinge pivot lies above an element for locking the rotation of said tilting angular lever in its two extreme positions, which is constituted by a locking shaft that is likewise coupled to said vertical fork; said tilting corner lever is constituted by a rear arm (relative to the direction of travel) and by a front arm: the first arm must be substantially horizontal in the position for locking the towing coupling, and the second arm, which forms an angle of more than 50° but less than 130° (for example approximately 90-100°) with the first arm, is provided at its end with two hollow seats, which are shaped like a circular arc and are mutually angularly offset and separated by a tooth: each one of said seats must be coupled cylindrically on said shaft, which is turned by the operator in passing between the two extreme angular positions through an angular sector that is equal to the angle traced by said tilting angular lever in order to pass from the horizontal position for locking the towing coupling with its rear arm to the disengagement position that is raised toward the vertical; said locking shaft has, in its region comprised between the prongs of said vertical fork, a flat portion for the transit of said tooth.

Said locking shaft can be actuated so as to rotate, through said angular sector, in contrast with the action of an elastic torsion element, by means of the rotation imparted to a transverse actuation lever, which is pivoted to one end of said shaft, after disengaging said lever from a rotation-preventing interlocking element provided in a hub that protrudes from one prong of said fork, and is coaxial with respect to the locking shaft, and in contrast with the reaction of an eccentric elastic element that acts parallel to the axis of said shaft at the end of said transverse actuation lever that lies opposite the maneuvering end.

The advantages achieved by this invention are: control of the stability of the two extreme angular positions of the element for locking the towing coupling, i.e., with the rear arm arranged horizontally and with the front arm raised toward the vertical by means of a single element, constituted by said locking shaft; faster maneuvering; stability and safety in both positions; greater strength of the device; low costs.

One embodiment of the invention is shown in the accompanying five drawings, wherein:

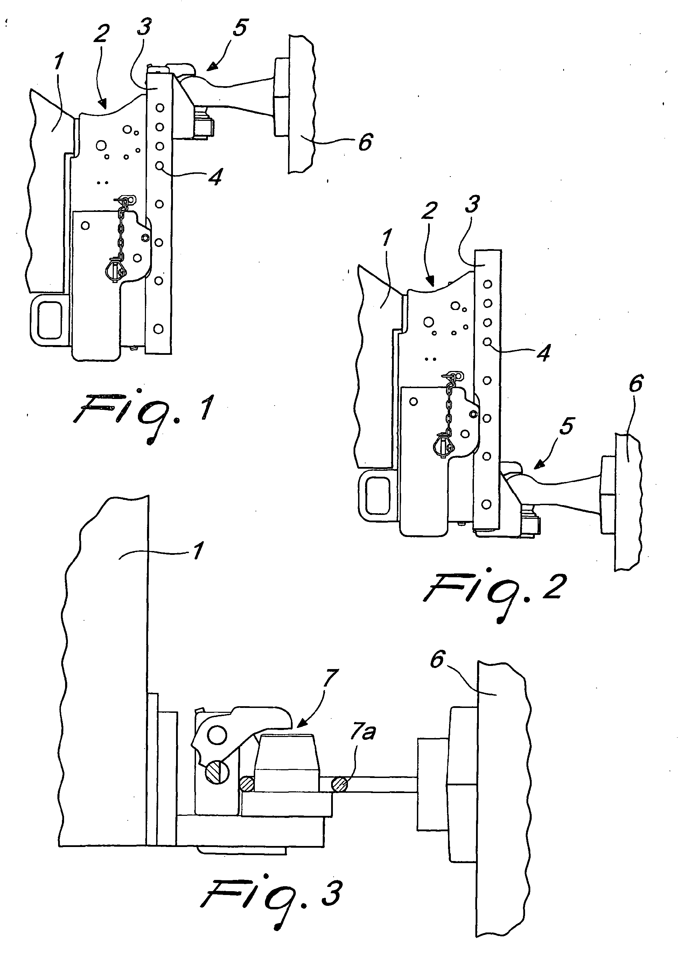

Figures 1 and 2 are partial elevation views of the towing device with spherical coupling between the towing vehicle and the towed vehicle, in the case in which the device is supported on a vertical slider, along which it can assume various vertical positions, for example respectively the highest and lowest;
Figure 3 is a partially sectional partial view of the case in which the towing coupling is cylindrical and has a single vertical position;

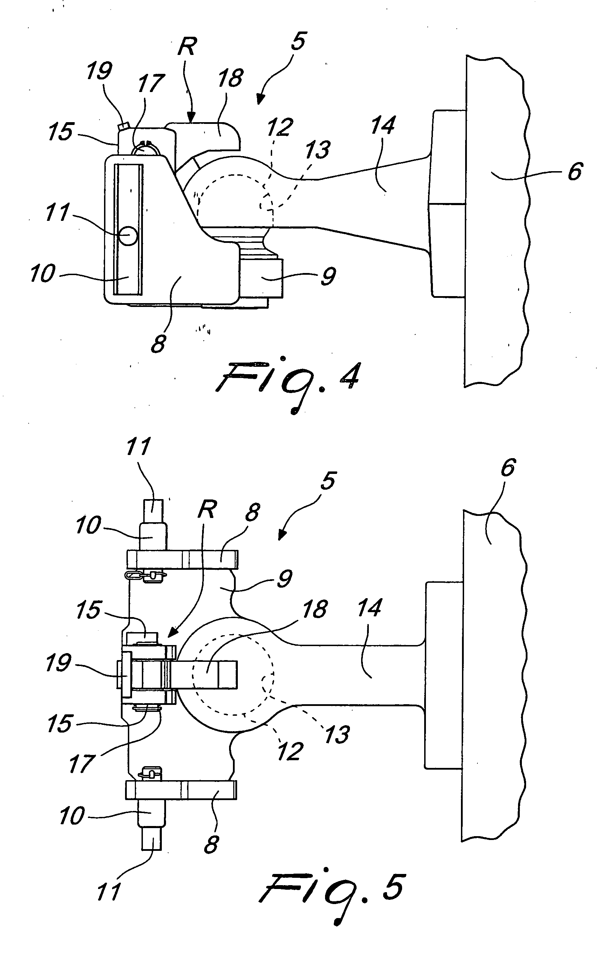

Figure 4 is an enlarged-scale elevation view of the towing device of Figures 1 and 2 without the support of the slider, but shown according to the invention;
Figure 5 is a plan view of Figure 4;
Figure 6 is a partially sectional enlarged-scale view of Figure 5, taken from the left;
Figure 7 is a partial and partially sectional view, taken along the horizontal line VII-VII of Figure 6 along the axis of the locking shaft;
Figures 8, 9, 10 are respectively longitudinal vertical sectional views of the device with the tilting angular lever in the stabilized open position, in the intermediate transit position, and in the likewise stable final closure position, illustrating the corresponding locking shaft (the cross-section of which is reduced centrally by flattening);
Figures 11, 12, 13 are partially sectional elevation views, which correspond respectively to the views of Figures 8, 9, 10, illustrating the positions of the lever for actuating the rotation of the locking shaft that cooperates with the tilting angular lever, in its extreme and intermediate positions.

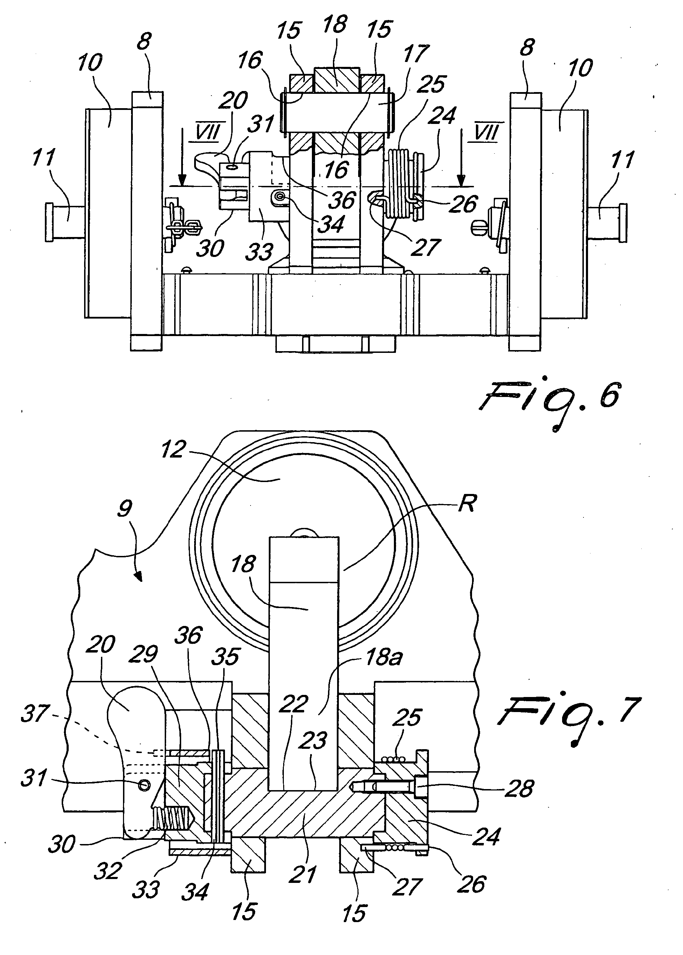

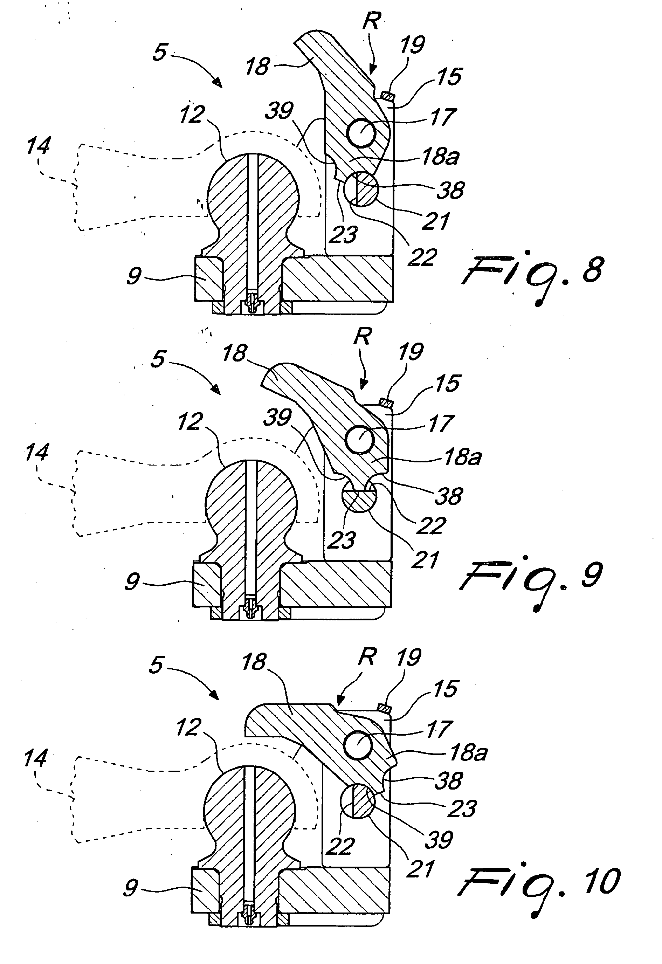

The reference numeral 1 designates the structure of the rear part of the self-propelled towing vehicle, which is provided with a rear frame 2 for supporting the guides 3 of the vertical slider, which are provided with mutually opposite pairs of holes 4 for the vertical adjustment of the support of the towing device 5 of the generic trailer 6; the reference numeral 7, 7a again designates the device according to the invention, but applied to a towing element with cylindrical coupling in a manner that cannot be adjusted vertically; the reference numerals 8, 9, 10, 11 respectively designate the sides and their horizontal surface for connection so as to constitute the support of the towing element, the pair of prism-like elements for vertical sliding in the guides 3, and two horizontal end pins 11 for fixing the vertical position of the support 8, 9. The reference numeral 12 designates the spherical towing element that protrudes from the horizontal surface 9 of the support in order to couple articulately to the hemispherical hollow seat 13 with which the lower face of the end of the drawbar 14 of the generic trailer 6 is provided. The reference numeral 15 designates the vertical fork that rises from the surface 9 of the base support in order to constitute the support of the device according to the invention, said fork being provided in an upper region with two mutually opposite transverse horizontal holes 16 for supporting therein the hinge pivot 17 of the tilting angular lever R according to the invention (which is instead indicated as a latch or simple tilting locking element in the background art), which is provided with a rear arm 18 and a front arm 18a and is designed to assume, stably according to the invention, both end positions, respectively a horizontal position as regards the rear am 18 for controlling said coupling and instead a position that is proximate to the vertical position for the disengagement of the towing coupling. The reference numeral 19 (Figure 8) designates an optional rear bridge of the vertical fork 15, which limits, where necessary, an excessive forward movement of the tilting lever R. The reference numeral 20 (Figure 6) designates a transverse actuation lever, which is pivoted to one end of the locking shaft 21, which is provided centrally with a flat portion 22 that is suitable to decrease its thickness in the corresponding portion (Figure 7), for the passage, through the recess produced by the flattened region and comprised between the prongs of the vertical fork 15, of the rear tooth 23 of the tilting angular lever R during its oscillation, the locking shaft 21 being constituted advantageously by three segments. The reference numeral 24 designates an extension segment, which is part of the locking shaft 21 (which constitutes the central segment) on the opposite side with respect to the side of the transverse actuation lever 20 in order to wrap around it the elastic torsion element 25, which is fixed by means of the end 26 at the rear in said extension and, at the other end 27, to the prong of the fork 15. The extension 24 advantageously has a larger diameter than the locking shaft 21 locked therein. The reference numeral 28 designates a means for fixing the extension 24 to the locking shaft 21. The reference numeral 29 designates a segment of a (cylindrical) extension of the locking shaft 21 that lies opposite the extension segment 24, which is provided with an end fork 30, the prongs of which support the fulcrum 31 of the transverse actuation lever 20, the resistance to disengagement of which is constituted by the elastic element 32, which is parallel to the axis of the locking shaft 21 and co-operates with the extension 29. The extension 29 advantageously has a larger diameter than the locking shaft 21 interlocked therein. The reference numeral 33 designates a hub, which is coaxial and external with respect to the extension 29 of the locking shaft 21 and is fixed to the outer face of the corresponding prong of the fork 15. The reference numeral 34 designates a diametrical elastic pin for connecting the extension 29 of the locking shaft 21 to said shaft. The elastic pin is provided with an end 35 that protrudes peripherally from one side of the cylindrical outer surface of the extension 29 enough to engage slidingly in the sector-shaped peripheral slot 36 of the hub 33, whose angular extension is suitable to trace the rotation angle required by the locking shaft 21 in order to determine the angular positions for stopping the rotation of said shaft in the two directions in order to allow the tilting lever, provided with arms 18, 18a, to oscillate between the two stabilized extreme angular positions. The reference numeral 37 designates a front safety tab for the hub 33, which is provided centrally with a notch that has peripheral lateral surfaces for guiding the automatic penetration in said notch of the spine of the actuation lever 20 when it is released by the operator, under the return action of the elastic torsion element 25. The reference numerals 38 and 39 (Figures 8, 9, 10) designate two hollow seats with a circular arc-like profile, which are provided in the front part 18a of the tilting lever R so as to straddle the tooth 23 in order to constitute a seat for locking said lever in its two extreme positions by way of a cylindrical coupling of each one on the locking shaft 21 in two mutually offset angular positions thereof. The value of the angular sector centered in the hole 16 in which the pivot 17 is coupled, traced between said two positions, being comprised advantageously between 30° and 90°, advantageously approximately 50°.

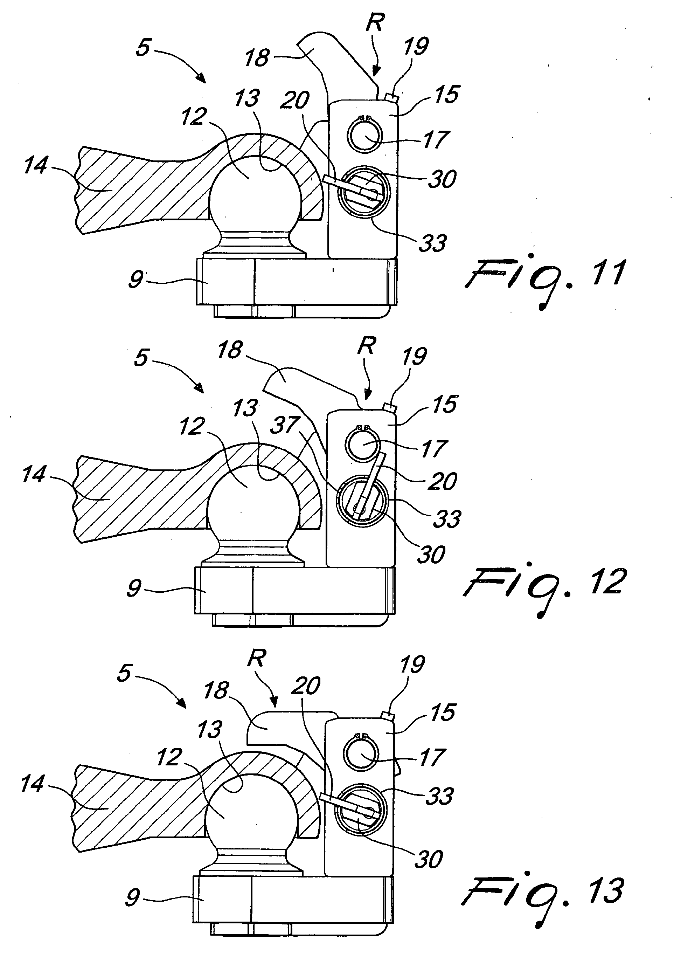

The maneuvers for locking and releasing the tilting angular lever R (Figures 8, 9, 10, 11, 12, 13) occur as follows: after performing the coupling between the seat 13 of the lower face of the drawbar 14 on the towing element 12, with the rear arm 18 of the tilting angular lever R lifted forward towards the vertical position (Figures 8, 11) for disengagement coupling between the hollow seat 38 of the front arm 18a and the shaft 21, the active coupling (which limits the lifting of the drawbar) of the rear arm 18 on the front end of the bar 14 is reached by way of the action of one hand of the operator. Such action consists in gripping the grip end of the transverse actuation lever 20, first pulling it outward in contrast with the axial reaction of the elastic element 32 that acts on its other end, in order to release it from the interlocking coupling for retention in the notch of the tab 37 of the hub 33 and then turn it in contrast with the reaction of the elastic torsion element 25, with a consequent manual angular movement of the shaft 21, the flat portion 22 of which reaches an angular position that allows the passage, in the corresponding recess, of the tooth 23 by means of a touch of the other hand of the operator so as to tilt backward the tilting lever R in order to pass from the disengagement coupling 38-21 to the working coupling 39-21 (Figures 10, 13), by releasing the transverse actuation lever 20, thus allowing the angular return action of the elastic torsion element 25 with angular return of the end 35 of the elastic pin 34 along the sector-shaped peripheral slot 36. The handle of the transverse actuation lever 20 then retracts automatically into the notch of the tab 37, by first rising along a peripheral inclined plane again by way of the action of said elastic torsion element and by then entering said notch by way of the longitudinal return action of the elastic element 32, with the result of locking safely, in a horizontal working position, the rear arm of the tilting lever R.

In order to achieve safety locking of the tilting lever R in the other extreme position, the operator acts likewise with one hand on the transverse actuation lever 20, first to release the tilting lever R and raise it toward the vertical position with the other hand, and then to release it when the locking shaft 21, by releasing the transverse lever 20, has passed automatically from the coupling 39-21 to the coupling 38-21.

In the practical embodiment, the materials, the dimensions, the constructive details, the mechanical and technological means that are per se known, such as for example elastic means, fixing means, means for supporting the pivot 17 and the locking shaft 21, may be different from the ones described but technically equivalent thereto, without thereby abandoning the scope of the juridical domain of the present invention.

The disclosures in Italian Patent Application No. MO2004A000145 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A towing device for trailers, equipment and machines in general, which comprises a towing element (12, 7), which is fixed in any manner to a rear part (1) of a self-propelled vehicle and a corresponding towing coupling element (respectively 13, 7a), which is fixed in front of a trailer (6), piece of equipment or machine in general, with a tilting element for locking the towing coupling (12-13, 7-7a), which is inserted between the prongs of the vertical fork (15), with said tilting locking element pivoted to said prongs and detachably fixable to said prongs, said tilting locking element being provided with a horizontal rear arm for locking the towing coupling, **characterized in that** said tilting locking element is constituted by a tilting angular lever R, which can be locked in its two extreme positions, a horizontal one for locking the towing coupling (12-13, 7-7a), and another one that is proximate to the vertical position for disengaging said coupling: a front part of said tilting angular lever being coupled alternately, in two angularly offset positions, with a same locking element (21), which is turned about its own axis through an angle that covers the angular interval traced by said tilting angular lever R in passing from one of its extreme positions to the other one, for example advantageously approximately 50°.

2. The device according to claim 1, **characterized in that** said tilting angular lever (R) provided with an intermediate hole (16), with a rear arm (18) for locking said towing coupling and a front arm (18a), is provided with a fulcrum pivot (17), which passes through said intermediate hole and is supported on a support that rises from the supporting surface (9) of the towing element (12, 7), in a position above said locking element, which is constituted by a locking shaft (21).

3. The device according to claim 2, **characterized in that** said locking shaft (21) has, in the portion of its range comprised between the supports, a portion that has a reduced thickness for example by way of the presence of a flat region (22), which forms a recess that is suitable to allow the end of the front arm (18a) of the tilting angular lever (R) to pass through it.

4. The device according to one of claims 1, 2, 3, **characterized in that** said locking shaft (21), after the tooth (23) located in the front arm (18a) of the filting angular lever R has passed through its portion having a reduced thickness, is coupled alternately, at the ends of its angular stroke, which are spaced by an extent that covers said angular distance between the two extreme positions of the tilting angular lever (R), to the cylindrical coupling seats (38, 39), which are provided at the end of its front arm (18a).

5. The device according to one of claims 2, 3, 4, **characterized in that** said locking element or locking shaft (21) is actuated so as to rotate between said two extreme positions in contrast with the reaction of two elastic elements with which said element or said shaft cooperate, one of said elements acting longitudinally while the other one acts peripherally, as a reaction to manual maneuvers.

6. The device according to one of claims 1,2, 3, 4, 5, **characterized in that** said locking element (21) is constituted by three segments: a central segment (21) and two other mutually opposite extension segments (24, 29); said central segment, provided with a flattened region (22) contained between the rotating supports (15) or other suitable supports, being coupled for example by interlocking with said two extensions (24, 29), which are fixed thereto by way of locking means: said extensions having a larger diameter than the locking shaft (21), in order to control the axial position of said central segment of said shaft with respect to said supports (15) or other suitable supports.

7. The device according to claim 6, **characterized in that** one of said two extensions (24) is provided peripherally with an elastic torsion element (25), which is anchored between the end, provided for this purpose, of said extension and the adjacent support (15), which is also preset for this purpose.

8. The device according to claim 6, **characterized in that** one of said two extensions (29) of the locking shaft (21) is constituted by a cylindrical base with an end fork (30) for supporting, in said fork, a pivot (31) that constitutes the fulcrum of a transverse actuation ever (20), which has an end suitable for being gripped by a hand and an opposite end that cooperates with an elastic means (32), which in turn cooperates with the cylindrical base of said extension (29).

9. The device according to claim 8 and one of the other claims, **characterized in that** since the fixing of the extension segment (29) to the end for coupling in the central segment of the locking shaft (21) is achieved by means of an elastic pin (34) that is coupled transversely to said segments, a hub (33) is fixed coaxially to the adjacent support (15) outside said extension segment (29) and is provided with a peripheral sector-shaped slot (36) for the peripheral sliding therein of the extension (35) of said elastic pin and for stopping it at the two extreme locking positions of the tilting angular lever (R).

10. The device according to claim 9 and one of the other claims, **characterized in that** said hub has, at its free end, a tab (37), which has sides that are shaped like a gradually inclined plane and is provided with a central notch for the edgeways insertion and locking therein of the grip end of the transverse actuation lever (20), which is stabilized by the reaction of the elastic element (32) that acts on the opposite end of said lever.

## Patentansprüche

1. Eine Abschleppvorrichtung für Anhänger, Anlagen und Maschinen im Allgemeinen, die ein Abschleppelement (12, 7) umfasst, welches auf eine beliebige Art an einem hinteren Teil (1) eines Fahrzeugs mit Eigenantrieb befestigt ist, und ein entsprechendes Abschlepp-Kopplungselement (13 bzw. 7a), das am vorderen Teil eines Anhängers (6), einer Anlage oder Maschine im Allgemeinen befestigt ist, mit einem Kippelement zum Verriegeln der Abschleppkopplung (12-13, 7-7a), das zwischen die Klauen der vertikalen Gabel (15) eingesetzt wird, wobei das Kipp-Verriegelungs-Element drehgelenkig an den Klauen angeordnet ist und lösbar an die Klauen befestigt werden kann, wobei das Kipp-Verriegelungs-Element mit einem horizontalen hinteren Arm zur Verriegelung der Abschleppkopplung ausgestattet ist, **dadurch gekennzeichnet, dass** das Kipp-Verriegelungs-Element aus einem winkeligen Kipphebel R besteht, welcher in seinen zwei äußersten Positionen festgestellt werden kann, einer horizontalen zur Verriegelung der Abschleppkopplung (12-13, 7-7a) und einer anderen, die sich nahe der vertikalen Position befindet, zur Lösung der Kopplung: wobei ein vorderer Teil des winkeligen Kipphebels wahlweise in zwei in Winkelrichtung versetzten Positionen mit einem gleichen Verriegelungselement (21) gekoppelt wird, das um seine eigene Achse durch einen Winkel gedreht wird, welcher den Winkelabstand abdeckt, über den sich der winkelige Kipphebel R von einer seiner äußersten Positionen zur anderen bewegt, zum Beispiel vorteilhafterweise ungefähr 50°.

2. Die Vorrichtung gemäß Anspruch 1, **dadurch gekennzeichnet, dass** der winkelige Kipphebel (R), der mit einem intermediären Loch (16), mit einem hinteren Arm (18) zur Verriegelung der Abschleppkopplung und mit einem vorderen Arm (18a) versehen ist, mit einem Drehzapfen (17) ausgestattet ist, der das intermediäre Loch durchdringt und auf einem Träger getragen wird, der von der Stützfläche (9) des Abschleppelements (12, 7) in einer Position oberhalb des Verriegelungselements aufragt, das aus einer Sicherungswelle (21) besteht.

3. Die Vorrichtung gemäß Anspruch 2, **dadurch gekennzeichnet, dass** die Sicherungswelle (21) in dem Abschnitt ihres Bereichs, der zwischen den Stützen liegt, einen Abschnitt hat, der eine verminderte Dicke hat, zum Beispiel aufgrund des Vorhandenseins eines flachen Bereichs (22), welcher eine Aussparung bildet, die geeignet ist, das Ende des vorderen Arms (18a) des winkeligen Kipphebels (R) durch sie hindurchdringen zu lassen.

4. Die Vorrichtung gemäß einem der Ansprüche 1, 2, 3, **dadurch gekennzeichnet, dass** die Sicherungswelle (21), nachdem der Zahn (23), der sich im vorderen Arm (18a) des winkeligen Kipphebels R befindet, durch ihren Abschnitt mit verminderter Dicke hindurchgedrungen ist, wechselweise an den Enden ihres Winkelhubs, die um eine Entfernung beabstandet sind, welche den Winkelabstand zwischen den zwei äußersten Positionen des winkeligen Kipphebels (R) abdeckt, mit den zylindrischen Kopplungssitzen (38, 39) gekoppelt wird, die am Ende ihres vorderen Arms (18a) bereitgestellt sind.

5. Die Vorrichtung gemäß einem der Ansprüche 2, 3, 4, **dadurch gekennzeichnet, dass** das Verriegelungselement oder die Sicherungswelle (21) so betätigt wird, dass es bzw. sie zwischen den beiden äußersten Positionen rotiert, im Gegensatz zur Reaktion zweier elastischer Elemente, mit denen das Element oder die Welle zusammenwirkt, wobei eines der Elemente in Längsrichtung arbeitet, während das andere peripher arbeitet, als Reaktion auf manuelle Eingriffe.

6. Die Vorrichtung gemäß einem der Ansprüche 1, 2, 3, 4, 5, **dadurch gekennzeichnet, dass** das Verriegelungselement (21) aus drei Segmenten besteht: einem mittleren Segment (21) und zwei anderen einander gegenüberliegenden Erweiterungssegmenten (24, 29), wobei das mittlere Segment, ausgestattet mit einem abgeflachten Bereich (22), der zwischen den sich drehenden Stützen (15) oder anderen geeigneten Stützen enthalten ist, zum Beispiel durch verblockung mit den beiden Erweiterungen (24, 29) gekoppelt wird, die durch Verriegelungsmittel daran befestigt werden, wobei die Erweiterungen einen größeren Durchmesser haben als die Sicherungswelle (21), um die axiale Position des mittleren Segments der Welle im Verhältnis zu den Stützen (15) oder anderen geeigneten Stützen zu steuern.

7. Die Vorrichtung gemäß Anspruch 6, **dadurch gekennzeichnet, dass** eine der beiden Erweiterungen (24) peripher mit einem elastischen Torsionselement (25) ausgestattet ist, welches zwischen dem Ende, bereitgestellt für diesen Zweck, der Erweiterung und der benachbarten Stütze (15) verankert ist, die ebenfalls für diesen Zweck vorhanden ist.

8. Die Vorrichtung gemäß Anspruch 6, **dadurch gekennzeichnet, dass** eine der beiden Erweiterungen (29) der Sicherungswelle (21) aus einer zylindrischen Basis mit einer Endgabelung (30) besteht, zum Tragen eines Drehzapfens (31) in dieser Gabelung, welcher den Drehpunkt eines transversalen Betätigungshebels (20) bildet, der ein Ende hat, das geeignet ist, von Hand gefasst zu werden, und ein gegenüberliegendes Ende, das mit einem elastischen Mittel (32) zusammenwirkt, welches wiederum mit der zylindrischen Basis der Erweiterung (29) zusammenwirkt.

9. Die Vorrichtung gemäß Anspruch 8 und einem der anderen Ansprüche, **dadurch gekennzeichnet, dass**, da die Befestigung des Erweiterungssegments (29) am Ende zur Kopplung mit dem mittleren Segment der Sicherungswelle (21) mit Hilfe eines elastischen Stifts (34) durchgeführt wird, der quer mit den Segmenten gekoppelt wird, eine Nabe (33) koaxial an der benachbarten Stütze (15) außerhalb des Erweiterungssegments (29) befestigt und mit einem peripheren sektorförmigen Schlitz (36) versehen ist, zum peripheren Gleiten der Verlängerung (35) des elastischen Stifts darin und zum Stoppen desselben in den beiden äußersten Verriegelungspasitionen des winkeligen Kipphebels (R).

10. Die Vorrichtung gemäß Anspruch 9 und einem der anderen Ansprüche, **dadurch gekennzeichnet, dass** die Nabe an ihrem freien Ende eine Lasche (37) hat, welche Seiten hat, die wie eine leicht abgeschrägte Ebene geformt sind, und mit einer zentralen Aussparung für das seitliche Einführen und Einrasten des Griff-Endes des transversalen Betätigungshebels (20) darin versehen ist, der stabilisiert wird durch die Reaktion des elastischen Elements (32), welches auf das gegenüberliegende Ende des Hebels wirkt.

## Revendications

1. Dispositif d'attelage pour des remorques, équipements et machines en général, qui comprend un élément d'attelage (12,7), qui est fixé d'une quelconque manière à une partie arrière (1) d'un véhicule automoteur et un élément d'accouplement d'attelage correspondant (respectivement 13,7a), qui est fixé devant une remorque (6), une pièce d'équipement ou de machine en général, avec un élément basculant pour bloquer l'accouplement d'attelage (12-13, 7-7a), qui est inséré entre les dents de la fourche verticale (15), avec ledit élément de blocage basculant monté pivotant sur lesdites dents et pouvant être fixé de manière amovible sur lesdites dents, ledit élément de blocage basculant étant muni d'un bras arrière horizontal pour bloquer l'accouplement, **caractérisé en ce que** ledit élément de blocage basculant est constitué par un levier angulaire basculant R, qui peut être bloqué dans ses deux positions extrêmes, une position horizontale pour bloquer l'accouplement de l'attelage (12-13, 7-7a), et une autre position qui est proche de la position verticale pour désengager ledit accouplement : une partie avant dudit levier angulaire basculant étant reliée alternativement, dans deux positions angulairement décalées, à un même élément de blocage (21), qui est tourné autour de son propre axe d'un angle qui couvre l'intervalle angulaire tracé par ledit levier angulaire basculant R en passant de l'une de ses positions extrêmes vers l'autre, par exemple avantageusement approximativement 50°.

2. Dispositif selon la revendication 1, **caractérisé en ce que** ledit levier angulaire basculant (R) pourvu d'un trou intermédiaire (16), avec un bras arrière (18) pour bloquer ledit accouplement d'attelage et un bras avant (18a), est muni d'un pivot d'appui (17), qui traverse ledit trou intermédiaire et est soutenu sur un support qui se dresse de la surface de support (9) de l'élément d'attelage (12,7), dans une position au-dessus dudit élément de blocage, lequel est constitué par un arbre de blocage (21).

3. Dispositif selon la revendication 2, **caractérisé en ce que** ledit arbre de blocage (21) présente, dans la partie de son étendue comprise entre les supports, une partie qui a une épaisseur réduite par exemple par l'intermédiaire de la présence d'une région plate (22), qui forme un évidement qui est destiné à permettre à l'extrémité du bras avant (18a) du levier angulaire basculant (R) de le traverser.

4. Dispositif selon l'une des revendications 1, 2, 3, **caractérisé en ce que** ledit arbre de blocage (21), après que la dent (23) située dans le bras avant (18a) du levier angulaire basculant (R) a traversé sa partie ayant une épaisseur réduite, est accouplé alternativement, au niveau des extrémités de sa course angulaire, qui sont espacées d'une étendue qui couvre ladite distance angulaire entre les deux positions extrêmes du levier angulaire basculant (R), aux portées d'appui d'accouplement cylindrique (38,39), qui sont prévues au niveau de l'extrémité de son bras avant (1 8a).

5. . Dispositif selon l'une des revendications 2, 3, 4, **caractérisé en ce que** ledit élément de blocage ou ledit arbre de blocage (21) est actionné de façon à tourner entre lesdites deux positions extrêmes en opposition avec la réaction de deux éléments élastiques avec lesquels ledit élément ou ledit arbre coopère, l'un desdits éléments agissant longitudinalement tandis que l'autre élément agit de manière périphérique, comme une réaction aux manoeuvres manuelles.

6. Dispositif selon l'une des revendications 1, 2, 3, 4, 5, **caractérisé en ce que** ledit élément de blocage (21) est constitué de trois segments : un segment central (21) et deux autres segments de prolongement mutuellement opposés (24, 29) ; ledit segment central, muni d'une région aplatie (22) contenu entre les supports rotatifs (15) ou autres supports appropriés, étant accouplé par exemple par emboîtement avec lesdits deux prolongements (24, 29), qui y sont fixés par l'intermédiaire de moyens de blocage : lesdits prolongements ayant un diamètre supérieur à l'arbre de blocage (21), de façon à contrôler la position axiale dudit segment central dudit arbre par rapport auxdits supports (15) ou autres supports appropriés.

7. Dispositif selon la revendication 6, **caractérisé en ce que** l'un desdits deux prolongements (24) est muni périphériquement d'un élément de torsion élastique (25), qui est fixé entre l'extrémité, prévue dans ce but, dudit prolongement et le support adjacent (15), qui est également prévu dans ce but.

8. Dispositif selon la revendication 6, **caractérisé en ce que** l'un desdits deux prolongements (29) de l'arbre de blocage (21) est constitué par une base cylindrique avec une fourche d'extrémité (30) pour supporter, dans ladite fourche, un pivot (31) qui constitue l'appui d'un levier d'actionnement transversal (20), qui a une extrémité adaptée pour être saisie par une main et une extrémité opposée qui coopère avec des moyens élastiques (32), qui à leur tour coopèrent avec la base cylindrique dudit prolongement (29).

9. Dispositif selon la revendication 8 et l'une des autres revendications, **caractérisé en ce que**, comme la fixation du segment de prolongement (29) à l'extrémité pour la liaison dans le segment central de l'arbre de blocage (21) est obtenue par l'intermédiaire d'une goupille élastique (34) qui est accouplée transversalement auxdits segments, un moyeu (33) est fixé coaxialement au support adjacent (15) à l'extérieur dudit segment de prolongement (29) et est pourvu d'une fente en forme de secteur périphérique (36) pour le coulissement périphérique dans celle-ci du prolongement (35) de ladite goupille élastique et pour la stopper au niveau des deux positions de blocage extrêmes du levier angulaire basculant (R).

10. Dispositif selon la revendication 9 et l'une des autres revendications, **caractérisé en ce que** ledit moyeu présente, au niveau de son extrémité libre, une patte (37), qui a des côtés qui sont façonnés comme un plan progressivement incliné, et est munie d'une encoche centrale pour l'insertion et le blocage dans celle-ci, latéralement, de l'extrémité de préhension du levier d'actionnement transversal (20), qui est stabilisé par la réaction de l'élément élastique (32) qui agit sur l'extrémité opposée dudit levier.
